# FASCICULE DE BREVET EUROPEEN

(11) **EP 3 123 225 B1**
(45) Date de publication et mention de la délivrance du brevet: **16.05.2018**
(21) Numéro de dépôt: 15718518.2
(22) Date de dépôt: 23.03.2015
(51) Int. Cl.: G02B 6/44

(54) **PRISE OPTIQUE AVEC DÉVIDOIR DE CÂBLE PRÉCONNECTE**
OPTISCHER ANSCHLUSS MIT IM VORAUS ANGESCHLOSSENER KABELTROMMEL
OPTICAL PORT WITH PRE-CONNECTED CABLE REEL

(30) Priorité: 27.03.2014 FR 1452674
(43) Date de publication de la demande: 01.02.2017
(73) Titulaire: Orange, 75015 Paris (FR)
(72) Inventeur: LECOQ, Daniel, F-22140 Berhet (FR)
(86) Numéro de dépôt international: PCT/FR2015/050726
(87) Numéro de publication internationale: WO 2015/145055

(56) Documents cités:
- US-A1- 2009 074 370
- US-A1- 2013 209 049

## Description

### 1. Domaine de l'invention

La demande d'invention se situe dans le domaine du raccordement de la fibre optique chez les abonnés à des services de communications électroniques, et plus particulièrement à l'installation de la prise optique destinée à connecter le terminal de réseau optique de l'abonné.

### 2. Etat de la technique antérieure

Dans le cadre du déploiement FTTH (Fiber To The Home, ou fibre jusqu'à la maison), un câble optique assure le raccordement entre d'une part l'arrivée de la fibre optique dans l'appartement desservi, et d'autre part le terminal optique de l'abonné proprement dit, aussi connu sous l'appellation ONT (Optical Network Terminal) ou ONU (Optical Network Unit). Au niveau de l'arrivée dans l'appartement, la prise est appelée DTIO, pour dispositif de terminaison intérieure optique, et au niveau du branchement de l'ONT, la prise est appelée PTO, pour prise terminale optique. Le câble est généralement pourvu à chacune de ses extrémités d'un connecteur de type SC/APC ("Subscriber Connector / Angled Physical Contact polish", ou connecteur d'abonné, avec polissage biseauté du contact physique).

L'invention concerne la prise PTO, et sauf indication contraire les termes "prise" ou "prise optique" désigneront par la suite cette prise.

Dernièrement, une telle prise comprend une longueur de câble pré-enroulée, et présente des contraintes multiples. La prise doit contenir une longueur suffisante de câble optique qui convient à la majorité des appartements, tout en restant discrète et d'encombrement limité. Avant, pendant et après les opérations d'installation, le rayon de courbure du câble ne doit jamais être inférieur à un seuil de cassure de la fibre contenue dans le câble. L'installation de la prise doit de plus pouvoir être réalisée par une personne non spécialiste de la fibre optique, et dans un temps limité.

On connait une prise optique qui comprend, enroulée d'avance dans une bobine, un câble optique de 900 µm de diamètre et d'une longueur de 25 à 40 m selon le modèle de prise utilisé pour couvrir la distance entre l'entrée d'un appartement et la pièce où doit être installée la prise. A chaque extrémité du câble est raccordée une fiche de connexion. La fiche à l'extrémité restant dans la prise, dite extrémité interne, est apte à être connectée au côté intérieur d'un raccord dans la prise, et la fiche à l'autre extrémité, dite externe, est apte à être raccordée à une autre prise optique, par exemple la prise DTIO. Le côté extérieur du raccord dans la prise, quant à lui, est destiné à recevoir la fiche de connexion de l'ONT. La prise est d'abord fixée à son emplacement final, par exemple sur un mur du salon à proximité de l'ONT. Ensuite, la longueur de câble nécessaire pour atteindre la prise DTIO dans l'entrée est déroulée par l'installateur en tirant l'extrémité externe hors de la prise qui fait alors office de dévidoir. Le câble déroulé est par exemple collé le long des plinthes ou le long des encoignures entre murs et plafonds, généralement à partir de l'entrée vers le salon. Eventuellement, la longueur déroulée en trop après la pose du câble doit être enroulée à nouveau à l'intérieur de la prise. Généralement il reste après installation une surlongueur de câble non utilisée, enroulée dans la bobine de la prise.

Le tirage du câble hors de la prise entraîne une rotation de la bobine. Pendant cette rotation la fiche de l'extrémité interne du câble ne peut pas être connectée au raccord car cela bloquerait la rotation. Cette extrémité interne doit donc être attachée à la bobine afin d'éviter tout frottement, entortillement ou accrochage susceptible d'endommager le câble, la fiche, le câble ou tout autre partie de la prise, lorsque l'extrémité interne tourne avec la bobine. L'installateur utilise par exemple un morceau de ruban adhésif pour attacher temporairement la fiche de l'extrémité interne du câble à la bobine, à un endroit de la bobine où l'extrémité du câble qui dépasse ne gène pas la rotation.

Une fois déroulée la longueur voulue de câble, l'installateur doit saisir la fiche de l'extrémité interne, la détacher de la bobine et la connecter au côté intérieur du raccord de la prise, ce qui d'une part comporte des risques supplémentaires d'endommagement du câble et de la fiche, et d'autre part constitue une opération délicate demandant du temps à l'installateur.

Les demandes de brevet US 2009/074370 A1 et US 2013/209049 A1 divulguent des prises optiques qui facilitent le déroulage du câble mais qui n'évitent pas une manipulation risquée des connexions internes.

Un des buts de l'invention est de remédier à ces inconvénients de l'état de la technique.

### 3. Exposé de l'invention

L'invention vient améliorer la situation à l'aide d'une prise optique comprenant:
- une base apte à être fixée sensiblement parallèlement à une surface plane,
- une bobine agencée pour tourner autour d'un axe sensiblement perpendiculaire à la base,
- un câble optique enroulé dans la bobine,
- un raccord dont un côté intérieur est connecté à l'intérieur de la prise à une première extrémité du câble, dite extrémité interne du câble, un côté extérieur du raccord étant destiné à être connecté à une fiche de connexion optique externe,
- un capot amovible apte à recouvrir la base et la bobine,
le câble étant destiné à être déroulé hors de la prise par tirage d'une deuxième extrémité du câble, dite extrémité externe du câble, le tirage entrainant une rotation de la bobine sur l'axe, le raccord étant solidaire de la bobine, et agencé pour prendre au moins une position en dehors du prolongement radial de la bobine et une position dite de rangement dans le prolongement radial de la bobine permettant au capot de recouvrir la base et la bobine.

Lorsque le câble est tiré hors de la prise par son extrémité externe, l'extrémité interne du câble, qui reste dans la bobine, tourne avec la bobine. Comme selon l'invention le raccord est solidaire de la bobine, le raccord et la bobine suivent exactement les mêmes mouvements de rotation lorsque le câble est tiré. De plus, comme le raccord prend une position en dehors du prolongement radial de la bobine, il n'est pas un obstacle au déroulement du câble. Cette position en dehors du prolongement radial de la bobine est par exemple sur une face libre de la bobine. Grâce à l'invention, il est donc possible de connecter à l'avance l'extrémité interne du câble au raccord de la prise, ce qui évite cette opération délicate à l'installateur. L'extrémité interne du câble peut sortir de la bobine par une fente aménagée sur la face libre de la bobine, ouverte en périmètre de la face libre de la bobine. Pour la connexion au raccord, l'extrémité est par exemple équipée d'une fiche de type SC/ACP.

Avantageusement, la prise optique peut ainsi être livrée avec l'extrémité interne du câble préconnectée au raccord de la prise. Non seulement les risques d'endommagement de la prise et de ses éléments sont éliminés, mais un gain de temps est obtenu pour l'opération d'installation de la prise.

Selon un aspect de l'invention, la bobine comprend une partie mobile sur laquelle est fixé le raccord, agencée pour faire basculer le raccord entre l'au moins une position en dehors du prolongement radial de la bobine, et une position de rangement dans le prolongement radial.

La prise étant destinée à être fixée à un mur, il est désirable de limiter son épaisseur totale afin de réduire au maximum son encombrement et de la rendre la plus discrète possible. Lorsque la bobine tourne, afin de ne pas bloquer le déroulement du câble, aucun élément solidaire de la bobine ne doit se trouver dans son prolongement radial. Le raccord doit donc se trouver à l'écart du prolongement radial de la bobine pendant sa rotation. Grâce à la partie mobile sur laquelle est fixé le raccord, il est malgré tout possible de positionner le raccord dans une position de rangement dans le prolongement radial de la bobine, par exemple lorsque la bobine ne tourne pas.

Avantageusement, lorsque le raccord est dans cette position, le raccord et la bobine peuvent être disposés l'un à côté de l'autre dans la base de la prise. L'épaisseur totale de la prise est ainsi réduite car elle est fonction soit de la hauteur axiale de la bobine, soit de la hauteur du raccord, mais pas de la somme des deux.

Ceci est d'autant plus avantageux si la fiche de connexion optique externe peut être connectée au côté extérieur du raccord dans cette position de rangement, et que cette position de rangement est aussi la position finale d'utilisation du raccord.

Selon un aspect de l'invention, la partie mobile est un volet relié par une charnière à la bobine.

Grâce au volet relié par une charnière à la bobine, il suffit d'immobiliser le raccord pour immobiliser le volet, et donc pour immobiliser la bobine, car la rigidité du volet et de la charnière empêche tout mouvement de la bobine par rapport au volet. Avantageusement, lorsque le raccord est immobilisé dans sa position de rangement, la surlongeur de câble non déroulée est ainsi maintenue à l'intérieur de la bobine car la rotation de celle-ci est bloquée.

Selon un aspect de l'invention, en alternative au volet et à la charnière, la partie mobile est une bande flexible dont une extrémité est fixée à la bobine.

Grâce à la bande flexible, les mêmes avantages que ceux du volet et la charnière sont obtenus, avec en plus celui d'éviter le recours à la charnière, ce qui rend la prise plus facile et moins chère à fabriquer. La bande est fixée sur le dessus de la bobine parallèlement à celle-ci, par exemple par un ou plusieurs points de colle à une première extrémité, et sa deuxième extrémité, à laquelle est fixé le raccord, dépasse du bord radial de la bobine. La bande est faite d'une matière solide mais souple et élastique dans le sens de la flexion, afin qu'il soit possible de rabattre sur le dessus de la bobine sa deuxième extrémité avec le raccord. Pendant la rotation de la bobine le raccord est retenu contre la bobine par un moyen d'attachement temporaire. Ainsi, lorsque la bobine est en rotation le raccord ne vient pas se positionner intempestivement dans le prolongement radial de la bobine et ainsi gêner le déroulement du câble. Si le raccord n'est pas retenu sur le dessus de la bobine, l'élasticité de la bande replace le raccord dans la position de rangement.

Selon un aspect de l'invention, la prise comprend en outre des moyens de blocage aptes à immobiliser le raccord, lorsque le raccord est dans la position en dehors du prolongement radial de la bobine.

Grâce à cet aspect, lorsque la bobine est en rotation, le raccord ne vient pas se positionner intempestivement dans le prolongement radial de la bobine et ainsi gêner le déroulement du câble.

Selon un aspect de l'invention, la prise comprend en outre des moyens de blocage aptes à immobiliser le raccord, lorsque le raccord est dans la position de rangement.

Grâce à cet aspect, le raccord est stabilisé pour résister à la poussée exercée par l'introduction d'une fiche de connexion par l'extérieur de la prise, ou à la traction exercée par son extraction. De plus la bobine est immobilisée car le raccord est solidaire de la bobine, ce qui empêche toute surlongueur de câble non déroulée de sortir intempestivement de la prise.

Selon un aspect de l'invention, les moyens de blocage comprennent au moins une butée dans la base, apte à bloquer le raccord dans la position de rangement.

Une telle butée est simple à fabriquer, et aucune opération complexe de blocage des éléments constitutifs de la prise n'est requise de la part de l'installateur.

Selon un aspect de l'invention, la prise comprend en outre un capot amovible apte à recouvrir la base et la bobine, et les moyens de blocage comprennent au moins une butée dans le capot, bloquant le raccord dans la position de rangement lorsque le capot recouvre la base.

Une telle butée est simple à fabriquer, et aucune opération complexe de blocage des éléments constitutifs de la prise n'est requise de la part de l'installateur. Cette butée peut tout simplement être une partie du rebord perpendiculaire audessus du capot, contre lequel peut s'appuyer le raccord.

De plus, la face interne du dessus du capot plaque le raccord contre la base, et empêche tout mouvement du raccord dans des plans perpendiculaires au plan de rotation de la bobine. Ainsi, le raccord et la bobine sont totalement immobilisés lorsque le capot recouvre la base.

Selon un aspect de l'invention, la section du câble est circulaire, ovale ou rectangulaire.

La prise selon l'invention convient également à des câbles non seulement à section circulaire, mais aussi des câbles à section aplatie tel que des câbles en forme de ruban, de section ovale ou rectangulaire.

Les différents aspects de la prise optique qui viennent d'être décrits peuvent être mis en oeuvre indépendamment les uns des autres ou en combinaison les uns avec les autres.

L'invention concerne aussi un procédé d'installation d'une prise optique, la prise comprenant :
- une base apte à être fixée sensiblement parallèlement à une surface plane,
- une bobine agencée pour tourner autour d'un axe sensiblement perpendiculaire à la base,
- un câble optique enroulé dans la bobine,
- un raccord dont un côté intérieur est connecté, à l'intérieur de la prise, à une première extrémité du câble, dite extrémité interne du câble, un côté extérieur du raccord étant destiné à être connecté à une fiche de connexion optique externe,
- un capot amovible apte à recouvrir la base et la bobine,
le câble étant destiné à être déroulé hors de la prise par tirage d'une deuxième extrémité du câble, dite extrémité externe du câble, le tirage entrainant une rotation de la bobine sur l'axe, le procédé comprenant les étapes suivantes :
- fixation de la base sur la surface plane,
- positionnement du raccord dans une position en dehors du prolongement radial de la bobine,
- déroulement d'une longueur de câble par tirage du câble hors de la prise par l'extrémité externe du câble,
- positionnement du raccord dans une position de rangement dans le prolongement radial de la bobine permettant au capot de recouvrir la base et la bobine,
- fixation du capot sur la base.

Le procédé d'installation d'une prise optique selon l'invention diffère de la pratique antérieure car il ne nécessite pas étape de connexion de l'extrémité interne du câble au raccord après l'étape de déroulement d'une longueur de câble hors de la prise. Grâce à la prise selon l'invention, cette opération délicate n'est plus nécessaire car l'extrémité interne du câble est préconnectée au raccord. Il suffit que l'installateur positionne le raccord en dehors du prolongement radial de la bobine avant de faire tourner celle-ci en tirant sur l'extrémité externe, puis qu'après déroulement du câble il positionne le raccord dans la position de rangement final. L'installateur n'a plus besoin de toucher à l'extrémité interne du câble, ce qui élimine les risques d'endommagement du câble et de sa connectique et fait gagner du temps.

### 4. Présentation des figures

D'autre avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1 présente une vue en perspective d'une prise optique selon la technique antérieure,
- la figure 2 présente une vue en perspective d'un exemple de prise optique, selon un mode de réalisation de l'invention, dans une position où la rotation de la bobine est libre,
- la figure 3 présente une vue en perspective de la prise optique de la figure 2, dans une position où la rotation de la bobine est bloquée,
- la figure 4 présente une vue en perspective de la prise optique de la figure 2, recouverte de son capot.

### 5. Description détaillée d'au moins un mode de réalisation de l'invention

Dans la suite de la description, on présente un exemple de mode de réalisation de l'invention se basant sur une prise PTO utilisant un câble optique de section circulaire de diamètre de 900 µm et des fiches de connexion de type AS/APC, mais l'invention s'applique également à d'autres types de prise, de câble et de connectique optique, tel que par exemple une prise DTIO, ou un câble à section non-circulaire.

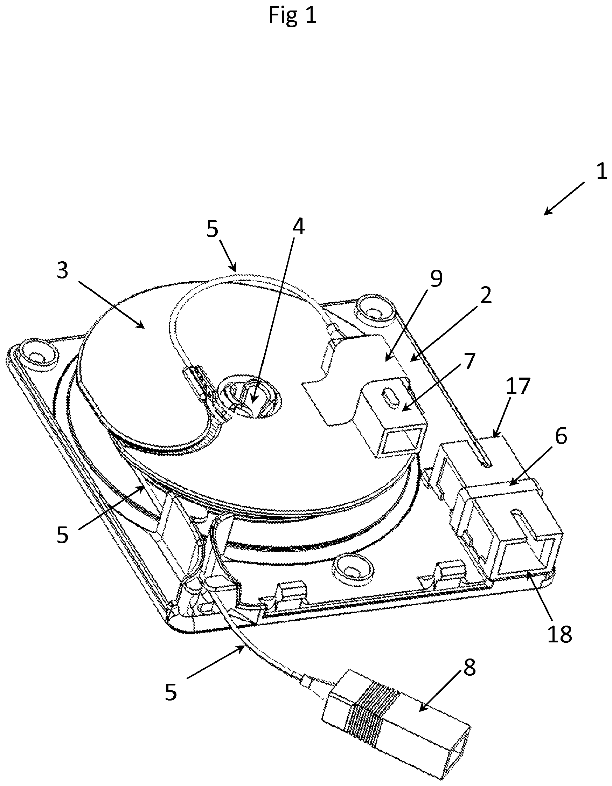

La **figure 1** présente une prise optique selon la technique antérieure.

Une telle prise optique 1 correspond au préambule de la revendication principale et comprend :
- une base 2 apte à être fixée sensiblement parallèlement à une surface plane,
- une bobine 3 agencée pour tourner autour d'un axe 4 sensiblement perpendiculaire à la base,
- un câble optique 5 enroulé dans la bobine 3,
- un raccord 6 dont un côté intérieur 17 est destiné à être connecté à l'intérieur de la prise 1 à une première extrémité 7 du câble 5, dite extrémité interne du câble, et dont un côté extérieur 18 est destiné à être connecté à une fiche de connexion optique externe non illustrée,
- le câble 5 étant destiné à être déroulé hors de la prise 1 par tirage d'une deuxième extrémité 8 du câble, dite extrémité externe du câble, le tirage entrainant une rotation de la bobine 3 sur l'axe 4.

Un inconvénient majeur d'une telle prise est que l'extrémité interne 7 du câble 5 doit être déconnectée du raccord 6 pendant le déroulement du câble 5 car le déroulement entraine une rotation de la bobine 3 qui serait impossible si l'extrémité interne 7 restait connectée au raccord 6 qui est fixé à la base 2. L'extrémité interne 7, devenue libre, doit donc être temporairement attachée à une partie de la bobine 3, de façon à ce qu'aucun obstacle ne vienne gêner la rotation et abîmer le câble 5, ou d'autres éléments de la prise 1. Une façon simple de réaliser cette attache temporaire est par un ruban adhésif 9. Il existe aussi des moyens d'attache temporaire plus fiables, mais plus complexes, comme par exemple un logement (non illustré) dans une partie de la bobine 3 spécialement prévu pour recevoir l'extrémité interne 7 lorsqu'elle n'est pas connectée au raccord 6.

Une fois l'étape de déroulement du câble 5 terminée, l'extrémité interne 7 du câble 5 doit être détachée de la bobine 3 et connectée au raccord 6, ce qui constitue aussi un inconvénient majeur, en raison du risque d'endommagement du câble et de sa connectique à chaque manipulation, sans compter le temps requis par cette opération.

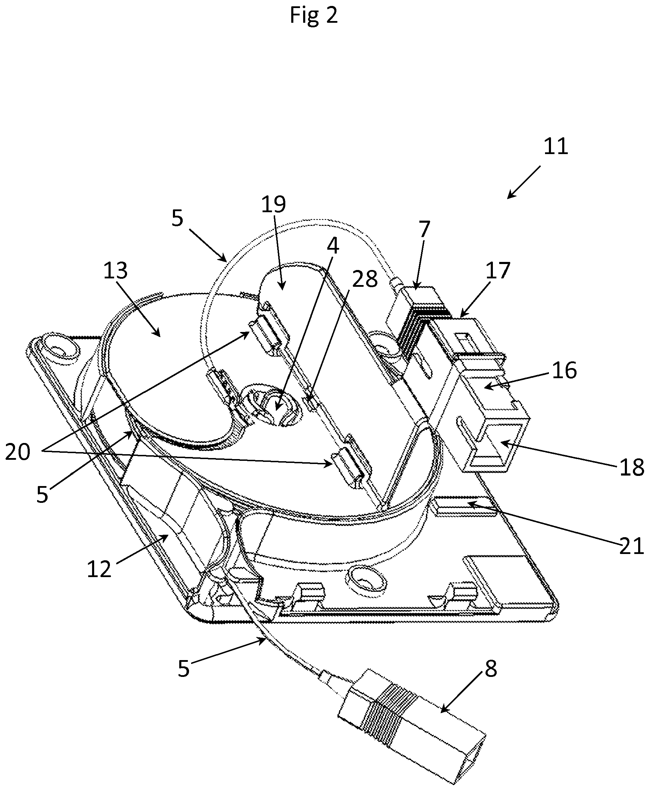

La **figure 2** présente un exemple de réalisation d'une prise optique selon l'invention, dans une position où la rotation de la bobine est libre.

La prise optique 11 selon ce mode de réalisation de l'invention est caractérisée en ce qu'elle comprend, en plus des caractéristiques de la prise optique selon la technique antérieure, un volet 19 relié à la bobine 13 par une ou plusieurs charnières 20 situées sur la face supérieure de la bobine 13.

Le raccord 16 et la base 12 diffèrent également de la technique antérieure en ce que le raccord n'est plus fixé à la base, mais au volet 19. Ce volet peut prendre plusieurs positions, dont par exemple une position sensiblement perpendiculaire à la bobine 13 et à la base 12, telle qu'illustrée par la figure 2, dans laquelle le raccord 16 est en dehors du prolongement radial de la bobine 13. Le volet 19 peut être maintenu dans cette position par exemple à l'aide d'un cran 28 dans l'axe de pivotement de la charnière 20. Ainsi, lorsque le volet 19 et le raccord 16 sont dans cette position, même si l'extrémité interne 7 du câble 5 est connecté au raccord 16, la rotation de la bobine 13, et donc le déroulement du câble 5 hors de la prise 11 par tirage de son extrémité externe 8, ne sont aucunement gênés.

Grâce au volet 19 de la prise 11 selon l'invention, il est donc possible de préconnecter l'extrémité interne 7 du câble au raccord 16, évitant ainsi à l'installateur de la prise de devoir le faire.

La ou les charnières 20 peuvent être ou non des charnières souples. Une charnière souple permet de mouler le volet 19 et le dessus de la bobine 13 en une seule pièce, ce qui présente l'avantage de rendre la prise 11 plus simple et moins chère à fabriquer.

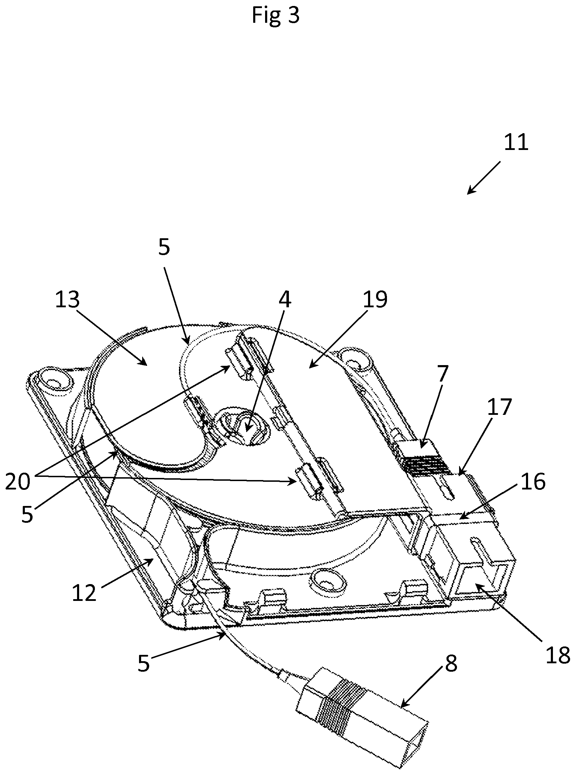

La **figure 3** présente la prise optique de la figure 2, dans une position où la rotation de la bobine est bloquée.

On comprend que lorsque la rotation de la bobine 13 est libre, le raccord 16 n'est pas dans sa position d'utilisation finale, dite position de rangement.

Le volet 19 peut aussi prendre une position mettant le raccord 16 en position de rangement, où la rotation de la bobine 13 est bloquée. En effet, lorsque le volet 19 est rabattu vers la base 12, il existe une orientation de la bobine 13 où le raccord 16 vient se positionner exactement contre une butée 21 (visible dans la figure 2, cachée par le raccord 16 dans la figure 3) prévue dans la base 12, à côté de la bobine 13. Dans cette position de rangement le raccord 16 est dans le prolongement radial de la bobine 13. L'agencement du raccord 16 en position de rangement avec la butée 21 produit au moins trois effets avantageux:
- la rotation de la bobine 13 est bloquée par l'ensemble formé par la butée 21, le raccord 16, le volet 19 et la charnière 20, et le câble 5 non déroulé reste donc dans la bobine 13,
- le raccord 16 reste en place même lorsqu'une poussée est exercée sur lui vers l'intérieur de la prise 11, par exemple lorsqu'une fiche de connexion externe y est introduite par le côté extérieur 18 du raccord 16,
- l'épaisseur de la prise 11 par rapport au mur est minimisée car le raccord 16 est à côté de la bobine 13, et non sur une des faces de la bobine 13, ce qui réduit l'encombrement de la prise 11 et la rend plus discrète.

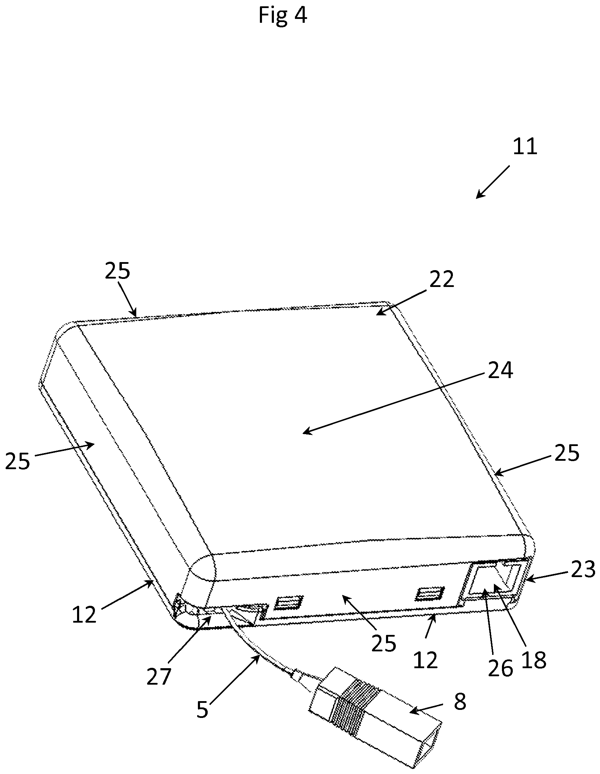

La **figure 4** présente la prise optique de la figure 2, recouverte de son capot.

La forme sensiblement plate de la prise 11 permet la pose d'un capot 22 amovible et de forme simple. Lorsqu'il est mis en place, ce capot 22 recouvre la base 12, la bobine 13, le raccord 16 et le volet 19, lorsque le raccord 16 est dans la position de rangement, et protège ainsi les éléments de la prise 11 à la fois des chocs et des regards. Il est composé d'une plaque 24 dont le contour épouse celui de la base 12, qui est par exemple rectangulaire, et d'un rebord 25 sur le périmètre de la plaque 24 et sensiblement perpendiculaire à celle-ci, d'une hauteur correspondant à l'épaisseur de la prise 11 entre la base 12 et le volet 19. Dans le rebord 25 sont aménagées au moins deux ouvertures 26 et 27 : une première ouverture 26 pour la fiche de connexion externe, et une deuxième ouverture 27 pour la partie du câble 5 déroulée hors de la prise.

Une caractéristique importante du capot 22 est qu'il peut comprendre une ou plusieurs butées 23 empêchant tout mouvement du raccord 16 dans le plan de rotation de la bobine 13, dont une peut être placée symétriquement à la butée 21 de la base, voire même remplacer la butée 21, et une autre est une partie du rebord 25 avec laquelle le raccord 16 est en contact lorsque le capot 22 est mis en place. Cet agencement produit les mêmes effets avantageux mentionnés plus haut, c'est à dire : bobine 13 bloquée et raccord 16 résistant à une poussée vers l'intérieur de la prise 11.

De plus, le capot 22, lorsqu'il est mis en place, est en contact avec le volet 19 et empêche celui-ci de quitter la position de rangement, ce qui a pour effet d'augmenter la solidité et la stabilité de la prise 11 selon l'invention.

Le capot 22 peut être verrouillé sur la base 12 à l'aide de tout système de fermeture connu.

Dans un mode de réalisation alternatif (non illustré), le volet 19 et la charnière 20 peuvent être remplacés par une bande mince, solide mais élastique en flexion, recouvrant au moins en partie à la fois la bobine 13 et le raccord 16 lorsqu'il est en position de rangement. Cette bande est fixée à la fois à la bobine 13 et au raccord 16, par exemple par des points de colle, ou par tout autre moyen de fixation peu encombrant. La flexibilité de la bande permet au raccord 16 d'être retiré de sa position de rangement sans arracher la bande de la bobine 13, et d'être ramené vers la face supérieure de la bobine 13. La partie médiane de la bande fait alors office de charnière souple. Dans cette position la rotation de la bobine 13 est libre. La bobine 13 peut comprendre un crochet ou tout autre moyen connu d'attachement temporaire afin de retenir le raccord 16 et l'empêcher de reprendre intempestivement sa position de rangement pendant la rotation de la bobine 13. Lorsque le raccord 16 n'est pas retenu contre la bobine 13, l'élasticité de la bande le ramène contre la base 12 et le maintient dans la position de rangement, ce qui est particulièrement utile lorsque le capot 22 n'est pas encore en place.

La bande présente sur le volet 19 l'avantage de pouvoir être encore plus mince et de réduire davantage l'encombrement de la prise 11.

Le volet 19 présente sur la bande l'avantage d'être plus solide et plus rigide.

Une telle prise selon ce mode de réalisation de l'invention peut loger jusqu'à 28 m de câble de 900 µm de diamètre, enroulés dans la bobine, et peut tenir dans un parallélépipède de dimensions intérieures 80 mm x 80 mm x 20 mm, avec le capot mis en place. Les dimensions extérieures d'une telle prise correspondent à la plupart des prises électriques murales utilisées dans l'aménagement intérieur des habitations. Avantageusement, la prise est ainsi compatible avec les normes existantes de la construction, et il est possible d'utiliser des accessoires existants tels que par exemple des caches de prise ou des outils d'installation.

Les exemples de réalisation de l'invention qui viennent d'être présentés ne sont que quelques uns des modes de réalisation envisageables. Ils montrent que l'invention permet de réaliser une prise optique avec l'extrémité interne du câble préconnectée et pouvant rester connectée pendant le déroulement du câble hors de la prise, tout en simplifiant le procédé d'installation de la prise.

## Revendications

1. **Prise optique (11)** comprenant :
• une base (12) apte à être fixée sensiblement parallèlement à une surface plane ;
• une bobine (13) agencée pour tourner autour d'un axe (4) sensiblement perpendiculaire à la base ;
• un câble optique (5) enroulé dans la bobine ;
• un raccord (16) dont un côté intérieur (17) est connecté à l'intérieur de la prise à une première extrémité (7) du câble, dite extrémité interne du câble, un côté extérieur (18) du raccord étant destiné à être connecté à une fiche de connexion optique externe ;
• un capot amovible (22) apte à recouvrir la base (12) et la bobine (13) ;
le câble étant destiné à être déroulé hors de la prise par tirage d'une deuxième extrémité (8) du câble, dite extrémité externe du câble, le tirage entrainant une rotation de la bobine (13) sur l'axe (4),
**caractérisée en ce que** le raccord (16) est solidaire de la bobine (13), et est agencé pour prendre au moins une position en dehors du prolongement radial de la bobine (13) et une position dite de rangement dans le prolongement radial de la bobine (13) permettant au capot (22) de recouvrir la base (12) et la bobine (13).

2. **Prise optique** selon la revendication 1, **caractérisée en ce que** la bobine (13) comprend une partie mobile (19) sur laquelle est fixé le raccord (16), agencée pour faire basculer le raccord (16) entre l'au moins une position en dehors du prolongement radial de la bobine, et la position de rangement dans le prolongement radial.

3. **Prise optique** selon la revendication 2, **caractérisée en ce que** la partie mobile est un volet (19) relié par une charnière (20) à la bobine (13).

4. **Prise optique** selon la revendication 2, **caractérisée en ce que** la partie mobile est une bande flexible dont une extrémité est fixée à la bobine (13).

5. **Prise optique** selon l'une des revendications 2 à 4, **caractérisée en ce que** la prise (11) comprend en outre des moyens de blocage (28) aptes à immobiliser le raccord (16), lorsque le raccord est dans la position en dehors du prolongement radial de la bobine.

6. **Prise optique** selon l'une des revendications précédentes, **caractérisée en ce que** la prise (11) comprend en outre des moyens de blocage (21, 23) aptes à immobiliser le raccord (16), lorsque le raccord est dans la position de rangement.

7. **Prise optique** selon la revendication 6, **caractérisée en ce que** les moyens de blocage comprennent au moins une butée (21) dans la base, apte à bloquer le raccord dans la position de rangement.

8. **Prise optique** selon la revendication 6, **caractérisée en ce que** les moyens de blocage comprennent au moins une butée (23) dans le capot (22), bloquant le raccord (16) dans la position de rangement lorsque le capot (22) recouvre la base (12).

9. **Prise optique** selon l'une des revendications précédentes, où la section du câble (5) est circulaire, ovale ou rectangulaire.

10. **Procédé** d'installation d'une prise optique (11), la prise comprenant :
• une base (12) apte à être fixée sensiblement parallèlement à une surface plane ;
• une bobine (13) agencée pour tourner autour d'un axe (4) sensiblement perpendiculaire à la base (12) ;
• un câble optique (5) enroulé dans la bobine (13) ;
• un raccord (16) dont un côté intérieur (17) est connecté, à l'intérieur de la prise (11), à une première extrémité (7) du câble, dite extrémité interne du câble, un côté extérieur (18) du raccord (16) étant destiné à être connecté à une fiche de connexion optique externe ;
• un capot amovible (22) apte à recouvrir la base (12) et la bobine (13) ;
le câble (5) étant destiné à être déroulé hors de la prise (11) par tirage d'une deuxième extrémité (8) du câble, dite extrémité externe du câble, le tirage entrainant une rotation de la bobine (13) sur l'axe (4),
le procédé étant **caractérisé en ce qu'**il comprend les étapes suivantes :
• fixation de la base (12) sur la surface plane ;
• positionnement du raccord (16) dans une position en dehors du prolongement radial de la bobine (13) ;
• déroulement d'une longueur de câble (5) par tirage du câble (5) hors de la prise (11) par l'extrémité externe (8) du câble (5) ;
• positionnement du raccord (16) dans une position de rangement dans le prolongement radial de la bobine (13) permettant au capot (22) de recouvrir la base (12) et la bobine (13);
• fixation du capot (22) sur la base (12).

## Patentansprüche

1. Optische Anschlussdose (11), umfassend:
• ein Unterteil (12), das geeignet ist, im Wesentlichen parallel zu einer ebenen Fläche befestigt zu werden;
• eine Spule (13), die dafür ausgelegt ist, um eine Achse (4) zu rotieren, die im Wesentlichen senkrecht zu dem Unterteil ist;
• ein optisches Kabel (5), das in der Spule aufgewickelt ist;
• ein Verbindungsstück (16), von dem eine innere Seite (17) im Inneren der Anschlussdose mit einem ersten Ende (7) des Kabels, inneres Ende des Kabels genannt, verbunden ist, während eine äußere Seite (18) des Verbindungsstücks dazu bestimmt ist, mit einem externen optischen Verbindungsstecker verbunden zu werden;
• eine abnehmbare Abdeckkappe (22), die geeignet ist, das Unterteil (12) und die Spule (13) abzudecken;
wobei das Kabel dazu bestimmt ist, durch Ziehen an einem zweiten Ende (8) des Kabels, äußeres Ende des Kabels genannt, abgewickelt und aus der Anschlussdose gezogen zu werden, wobei das Ziehen eine Drehung der Spule (13) um die Achse (4) zur Folge hat,
**dadurch gekennzeichnet, dass** das Verbindungsstück (16) fest mit der Spule (13) verbunden ist und dafür ausgelegt ist, wenigstens eine Position außerhalb der radialen Verlängerung der Spule (13) und eine Position, Verstauposition genannt, in der radialen Verlängerung der Spule (13), die es der Abdeckkappe (22) ermöglicht, das Unterteil (12) und die Spule (13) abzudecken, einzunehmen.

2. Optische Anschlussdose nach Anspruch 1, **dadurch gekennzeichnet, dass** die Spule (13) einen beweglichen Teil (19), an welchem das Verbindungsstück (16) befestigt ist, umfasst, der dafür ausgelegt ist, ein Schwenken des Verbindungsstücks (16) zwischen der Position außerhalb der radialen Verlängerung der Spule und der Verstauposition in der radialen Verlängerung zu bewirken.

3. Optische Anschlussdose nach Anspruch 2, **dadurch gekennzeichnet, dass** der bewegliche Teil eine Klappe (19) ist, die durch ein Scharnier (20) mit der Spule (13) verbunden ist.

4. Optische Anschlussdose nach Anspruch 2, **dadurch gekennzeichnet, dass** der bewegliche Teil ein flexibles Band ist, von dem ein Ende an der Spule (13) befestigt ist.

5. Optische Anschlussdose nach einem der Ansprüche 2 bis 4, **dadurch gekennzeichnet, dass** die Anschlussdose (11) außerdem Arretierungsmittel (28) umfasst, die geeignet sind, das Verbindungsstück (16) zu arretieren, wenn sich das Verbindungsstück in der Position außerhalb der radialen Verlängerung der Spule befindet.

6. Optische Anschlussdose nach einem der vorhergehenden Ansprüche, dass die Anschlussdose (11) außerdem Arretierungsmittel (21, 23) umfasst, die geeignet sind, das Verbindungsstück (16) zu arretieren, wenn sich das Verbindungsstück in der Verstauposition befindet.

7. Optische Anschlussdose nach Anspruch 6, **dadurch gekennzeichnet, dass** die Arretierungsmittel wenigstens einen Anschlag (21) im Unterteil umfassen, der geeignet ist, das Verbindungsstück in der Verstauposition zu blockieren.

8. Optische Anschlussdose nach Anspruch 6, **dadurch gekennzeichnet, dass** die Arretierungsmittel wenigstens einen Anschlag (23) in der Abdeckkappe (22) umfassen, der das Verbindungsstück (16) in der Verstauposition blockiert, wenn die Abdeckkappe (22) das Unterteil (12) abdeckt.

9. Optische Anschlussdose nach einem der vorhergehenden Ansprüche, wobei der Querschnitt des Kabels (5) kreisförmig, oval oder rechteckig ist.

10. Verfahren zur Installation einer optischen Anschlussdose (11), wobei die Anschlussdose umfasst:
• ein Unterteil (12), das geeignet ist, im Wesentlichen parallel zu einer ebenen Fläche befestigt zu werden;
• eine Spule (13), die dafür ausgelegt ist, um eine Achse (4) zu rotieren, die im Wesentlichen senkrecht zu dem Unterteil (12) ist;
• ein optisches Kabel (5), das in der Spule (13) aufgewickelt ist;
• ein Verbindungsstück (16), von dem eine innere Seite (17) im Inneren der Anschlussdose (11) mit einem ersten Ende (7) des Kabels, inneres Ende des Kabels genannt, verbunden ist, während eine äußere Seite (18) des Verbindungsstücks (16) dazu bestimmt ist, mit einem externen optischen Verbindungsstecker verbunden zu werden;
• eine abnehmbare Abdeckkappe (22), die geeignet ist, das Unterteil (12) und die Spule (13) abzudecken;
wobei das Kabel (5) dazu bestimmt ist, durch Ziehen an einem zweiten Ende (8) des Kabels, äußeres Ende des Kabels genannt, abgewickelt und aus der Anschlussdose (11) gezogen zu werden, wobei das Ziehen eine Drehung der Spule (13) um die Achse (4) zur Folge hat,
wobei das Verfahren **dadurch gekennzeichnet ist, dass** es die folgenden Schritte umfasst:
• Befestigung des Unterteils (12) auf der ebenen Fläche;
• Positionierung des Verbindungsstücks (16) in einer Position außerhalb der radialen Verlängerung der Spule (13);
• Abwickeln einer Länge des Kabels (5) durch Ziehen des Kabels (5) am äußeren Ende (8) des Kabels (5) aus der Anschlussdose (11);
• Positionierung des Verbindungsstücks (16) in einer Verstauposition in der radialen Verlängerung der Spule (13), die es der Abdeckkappe (22) ermöglicht, das Unterteil (12) und die Spule (13) abzudecken;
• Befestigung der Abdeckkappe (22) auf dem Unterteil (12).

## Claims

1. **Optical enclosure (11)** comprising:
• a base (12) that can be fixed substantially parallel with a planar surface;
• a spool (13) arranged to rotate about a shaft (4) which is substantially perpendicular to the base;
• an optical cable (5) wound in the spool;
• a connecting piece (16), an inner side (17) of which is connected inside the enclosure to a first end (7) of the cable, called the internal end of the cable, an outer side (18) of the connecting piece being intended to be connected to an external optical connection plug;
• a removable lid (22) that can cover the base (12) and the spool (13);
the cable being intended to be unwound out of the enclosure by pulling a second end (8) of the cable, called the external end of the cable, the pulling causing the spool (13) to rotate on the shaft (4), **characterized in that** the connecting piece (16) is rigidly connected to the spool (13), and is arranged to assume at least a position outside the radial continuation of the spool (13) and a so-called storage position in the radial continuation of the spool (13) allowing the lid (22) to cover the base (12) and the spool (13).

2. **Optical enclosure** according to Claim 1, **characterized in that** the spool (13) comprises a movable part (19) on which the connecting piece (16) is fixed, which movable part is arranged to tilt the connecting piece (16) between the at least one position outside the radial continuation of the spool, and the storage position in the radial continuation.

3. **Optical enclosure** according to Claim 2, **characterized in that** the movable part is a flap (19) connected by a hinge (20) to the spool (13).

4. **Optical enclosure** according to Claim 2, **characterized in that** the movable part is a flexible strip having one end fixed to the spool (13).

5. **Optical enclosure** according to one of Claims 2 to 4, **characterized in that** the enclosure (11) further comprises blocking means (28) that can immobilize the connecting piece (16), when the connecting piece is in the position outside the radial continuation of the spool.

6. **Optical enclosure** according to one of the preceding claims, **characterized in that** the enclosure (11) further comprises blocking means (21, 23) that can immobilize the connecting piece (16), when the connecting piece is in the storage position.

7. **Optical enclosure** according to Claim 6, **characterized in that** the blocking means comprise at least one abutment (21) in the base, which can block the connecting piece in the storage position.

8. **Optical enclosure** according to Claim 6, **characterized in that** the blocking means comprise at least one abutment (23) in the lid (22), blocking the connecting piece (16) in the storage position when the lid (22) covers the base (12).

9. **Optical enclosure** according to one of the preceding claims, wherein the section of the cable (5) is circular, oval or rectangular.

10. **Method** of installing an optical enclosure (11), the enclosure comprising:
• a base (12) that can be fixed substantially parallel with a planar surface;
• a spool (13) arranged to rotate about a shaft (4) which is substantially perpendicular to the base (12);
• an optical cable (5) wound in the spool (13);
• a connecting piece (16), an inner side (17) of which is connected, inside the enclosure (11), to a first end (7) of the cable, called the internal end of the cable, an outer side (18) of the connecting piece (16) being intended to be connected to an external optical connection plug;
• a removable lid (22) that can cover the base (12) and the spool (13);
the cable (5) being intended to be unwound out of the enclosure (11) by pulling a second end (8) of the cable, called the external end of the cable, the pulling causing the spool (13) to rotate on the shaft (4),
the method being **characterized in that** it comprises the following steps:
• fixing the base (12) on the planar surface;
• positioning the connecting piece (16) in a position outside the radial continuation of the spool (13);
• unwinding a length of cable (5) by pulling the cable (5) out of the enclosure (11) by the external end (8) of the cable (5);
• positioning the connecting piece (16) in a storage position in the radial continuation of the spool (13) allowing the lid (22) to cover the base (12) and the spool (13);
• fixing a lid (22) on the base (12).
